**Europäisches Patentamt**

**European Patent Office**

**Office européen des brevets**

(11) Publication number: **0 124 788**

**B1**

## EUROPEAN PATENT SPECIFICATION

(45) Date of publication of patent specification: **10.08.88**

(21) Application number: **84103948.0**

(22) Date of filing: **09.04.84**

(51) Int. Cl.⁴: **G 08 B 3/10,** H 04 Q 7/02, H 04 B 1/16

(54) **Radio paging system and receiver therefor.**

(30) Priority: **09.04.83 JP 61522/83**
**09.04.83 JP 61523/83**

(43) Date of publication of application:
**14.11.84 Bulletin 84/46**

(45) Publication of the grant of the patent:
**10.08.88 Bulletin 88/32**

(84) Designated Contracting States:
**DE FR GB**

(56) References cited:
**US-A-4 194 153**

**IEEE TRANSACTIONS ON VEHICULAR TECHNOLOGY, vol. VT-30, No. 2, May 1981, New York, USA; P.J. MABEY "Digital signaling for radio paging", pages 85-94**
**Patent Abstracts of Japan vol. 6, no. 115, 26 June 1982 & JP-A-57-44344**

(73) Proprietor: **NEC CORPORATION**
**33-1, Shiba 5-chome, Minato-ku**
**Tokyo 108 (JP)**

(72) Inventor: **Nagata, Koichi c/o NEC Corporation**
**33-1, Shiba 5-chome Minato-ku**
**Tokyo (JP)**
Inventor: **Oyagi, Takashi c/o NEC Corporation**
**33-1, Shiba 5-chome Minato-ku**
**Tokyo (JP)**
Inventor: **Mori, Toshihiro c/o NEC Corporation**
**33-1, Shiba 5-chome Minato-ku**
**Tokyo (JP)**

(74) Representative: **Vossius & Partner**
**Siebertstrasse 4 P.O. Box 86 07 67**
**D-8000 München 86 (DE)**

EP 0 124 788 B1

Courier Press, Leamington Spa, England.

## Description

The present invention relates to a radio paging system, a paging receiver and a base station for use in a radio paging system, and to method of switching in a radio paging system, the repetition period of receiver-energizing pulses depending on call traffic. More particularly the invention relates to a radio paging system enabling a battery saving function at each of its battery-powered receivers.

Such battery saving systems are known from US—A—4 194 153, in which a paging receiver intermittently operates at a predetermined first repetition period, and, upon receiving and detecting a battery saving release signal set for a time duration longer than the first repetition period and transmitted from a base station, continuously operates for a certain length of time to receive a paging signal addressed to the receiver. (The last-mentioned length of time is set longer than the time duration of the sequence of a sginal comprising the battery saving release signal and the paging signal transmitted from the base station.) Then, when the above-mentioned certain length of time elapses, the paging receiver again returns to the intermittent operation at the first repetition period.

In this system of the prior art, the first repetition period of each paging receiver is usually so set as to be adequate for processing calls when the system is at its peak traffic. Even when the receivers are paged much less frequently than in the daytime and therefore the base station rarely transmits paging signals, each paging receiver repeats its intermittent operations at the first repetition period, resulting in a disadvantage that the receivers waste battery power. This disadvantage so far has been coped with by turning off, during nighttime, power supply to the redeiver with a power switch. However, the paging receiver under the turned off state unavoidably misses paging signals.

Therefore, an object of the present invention is to provide a radio paging system and a switching method capable of reducing the power consumption at paging receivers.

Another object of the present invention is to provide a radio paging system and a switching method capable of changing the repetition period of the battery saving pulses for paging receivers depending on the call traffic.

Yet another object of the present invention is to provide a paging receiver and a base station including a plurality of paging receivers being capable of changing the battery saving periods adapted to the paging system outlined hereinabove.

These objects are achieved by the radio paging system, paging receiver, base station and switching method according to the claims.

The above and other objects, features and advantages of the present invention will become more apparent from the detailed description hereunder taken in conjunction with the accompanying drawings, wherein:

Fig. 1 is a block diagram illustrating an embodiment of the base station of a paging system according to the present invention;

Figs. 2A to 2H are time charts for describing the operation of the base station illustrated in Fig. 1;

Fig. 3 is a block diagram illustrating an embodiment of a paging receiver for use in the radio paging system according to the present invention;

Figs. 4A to 4F are time charts for describing the operation of the paging receiver illustrated in Fig. 3; and

Figs. 5A to 5E are time charts for describing the repetition period switching operation for battery saving by the paging receiver illustrated in Fig. 3.

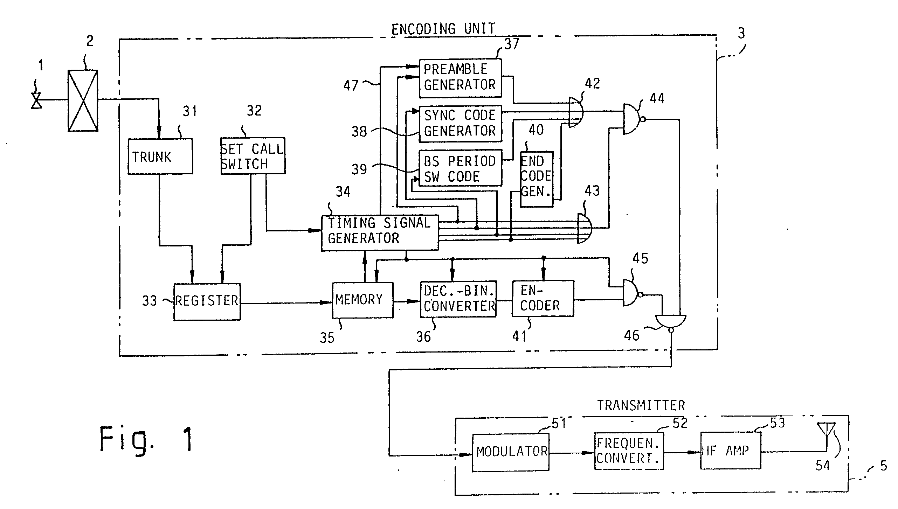

Referring to Fig. 1, a subscriber's telephone set 1 is connected to a trunk 31 in an encoding unit 3 through a telephone exchange 2. A register 33 counts the dial pulses inputted from the trunk 31, and converts the call number of a personal paging receiver transmitted from the calling parties telephone set 1 into a binary-coded decimal (BCD) number. A set call switch 32 permits the entry of the receiver's number into the register 33 by an operator's manual procedure. A memory circuit 35 stores the BCD number coming from the register 33. A code converter 36 converts into a binary code the BCD number supplied from the memory circuit 35. An encoding circuit 41 adds parity check bits to the output signal from the code converter 36 to provide a cyclic code.

A preamble code generator 37 repeatedly generates a unique word for a predetermined first duration of time (for a length of time to repeat the generation 9 times in this instance) or second duration of time (for a length of time to repeat the generation 1,025 times). A sync code generator 38 generates a sync code to follow the unique word. A battery saving period switching (BSPS) code generator 39 generates a BSPS code to follow the sync code. An end code generator 40 generates an end code. A timing signal generator circuit 34 individually controls the circuits 35, 36, 37, 38, 39, 40 and 41, OR gates 42 and 43, and NAND gates 44 and 45, and supplies an encoding unit output through another NAND gate 46, to a transmitter 5. The transmitter 5 comprises an FSK modulator 51, a frequency converter 52, a power amplifier 53 and an antenna 54.

When trying to call paging receiver (to be described in further detail below), an ordinary telephone subscriber dials on telephone set 1 the call number assigned for the paging receiver. The dial signal is inputted to the trunk 31 via the exchange 2, and further to the register 33. It also is possible for an operator to manually operate the set call switch 32 to enter the call number into the register 33. The register 33, having received a predetermined number of calls (for example four), transfers to the memory circuit 35 all the call numbers converted into BCD numbers. The memory circuit 35 keeps the call numbers until a read signal comes from the timing circuit 34. The capacity of the memory circuit 35 is 80 calls in this embodiment.

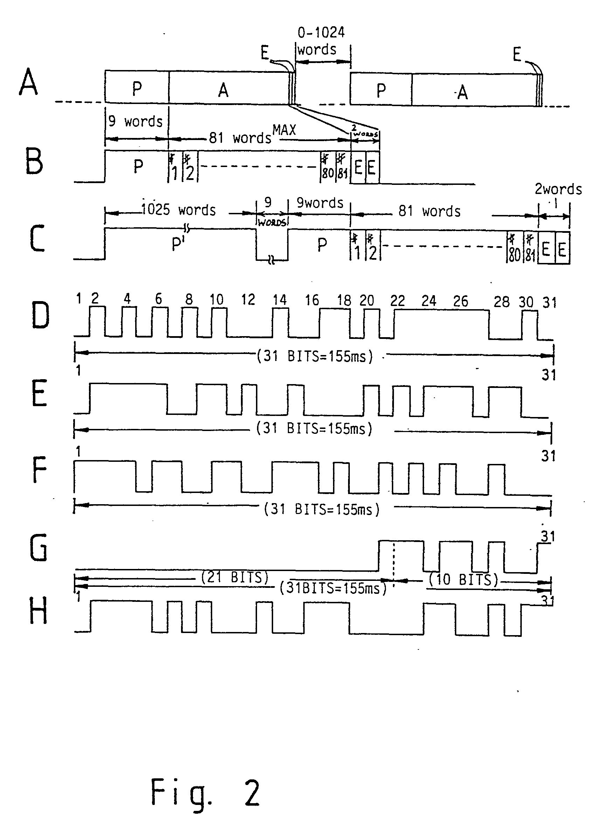

As call numbers are supplied to the memory circuit 35, the timing circuit 34 actuates the preamble code generator 37 to supply the preamble code to the transmitter 5 via the OR gate 42 and NAND gates 44 and 46. The length of time during which the preamble code P (see Fig. 2A or 2B) is supplied is equal to nine words (i.e., 155 msec×9=1,395 msec), and each word (hereinafter called the unique word) consists of a 31-bit code pattern as shown in Fig. 2D. The preamble code generator 37 has a 31-bit counter actuated by the output of the timing circuit 34, a unique word supply counter and a read-only-memory (ROM, for instance μPD501D manufactured and marketed by NEC Corporation) in which the code pattern of Fig. 2D is set in advance. This preamble code generator 37 reads out the contents of the ROM in reponse to the output of the 31-bit counter, and further repeats the reading of the ROM's contents the number of times set by the unique word supply counter. Upon completion of the supply of the (nine-word) preamble code P, the timing circuit 34 actuated the sync code generator 38 to supply the sync code, consisting of the code pattern of Fig. 2E, in the position of word #1 in Fig. 2B. The timing circuit 34, following the completion of the sync code supply, further supplies a read signal to the memory circuit 35, and at the same time actuates the code converter 36, encoding circuit 41 and NAND gate 45. The duration of the actuation is equal to 80 words at the maximum (155 msec×80=not more than 12.4 sec) as shown in Fig. 2B.

If call numbers are stored in the memory circuit 35, the stored numbers are transferred to the code converter 36 one by one in the order of their storage in response to the read signal from the timing circuit 34 until the memory circuit 35 is cleared. The code converter 36 converts BCD numbers into 21-bit binary codes. The encoder 41 adds 10 parity check bits to the 21-bit information codes to supply an address number word representative of the call number and consisting of the Bose-Chaudhuri Hocquenghem (BCH) (31, 21) cyclic code, to the transmitter 5 via the NAND gates 45 and 46. An example of a code pattern of address number words is shown in Fig. 2G. As illustrated in Fig. 2B, 80 address number words at the maximum from #2 to #81 in that order are consecutively supplied. This encoding circuit 41 may be composed of shift registers and adders as described in Wesley Peterson, "Error-Correcting Codes," pp. 149—152, 1962, The M.I.T. Press.

The memory circuit 35, when it is cleared, supplies its output to the timing circuit 34. In response to this output, the timing circuit 34 suspends the operation of the circuits 35, 36 and 41, and at the same time actuates the end code generator 40 to send the end code E to the transmitter 5 via the OR gates 42 and 43 and NAND gates 44 and 46 as shown in Figs. 2A and 2B. The one-word code pattern of the end code E is shown in Fig. 2H. This code pattern is a pseudonoise (PN) pattern consisting of 31 bits. The end code generator 40 which may be composed similarly to the aforementioned preamble signal generator 37, completes code supply in two words (155 msec×2=310 msec).

The timing circuit 34, upon completion of code supply by the end code generator 40, starts a timer built into it. The length of time at which this timer is set is 2 minutes and 38.72 seconds (1,024 words×155 msec) in this embodiment. In response to a new call number, if any, from the memory circuit 35 within this period of time, the timing circuit 34 repeats the foregoing series of actions. The sequence of signals at this time is shown in Fig. 2A.

Meanwhile the timing circuit 34, when the time of its built-in timer has lapsed, shifts to actions to change the battery saving repetition period. Thus the timing circuit 34 starts the preamble code generator 37 to supply nine unique words similar to code P in Fig. 2B, and then enables the sync code generator 38 to supply the one-word sync code shown in Fig. 2E. Further, the timing circuit 34 starts the BSPS code generator 39 to supply at least one word of BSPS code consisting of the 31-bit pattern shown in Fig. 2F, and then starts the end code generator 40 to supply two words of the end code of Fig. 2H. The timing circuit 34 generates no output unless a new call number is supplied to the memory circuit 35.

When a new call number is supplied to the memory circuit 35, the timing circuit 34 starts the preamble code generator 37, and at the same time changes from 9 to 1,025 the count of the unique word supply counter within the preamble code generator 37 by supplying a unique word supply counter switching signal to the preamble code generator 37 through a connecting line 47, so that 1,025 unique words (P' in Fig. 2C) are supplied from the preamble code generator 37. After that, the timing circuit 34 suspends signal supply for a nine-word length of time, re-starts the preamble code generator 37, and at the same time changes from 1,025 to 9 the count of the unique word supply counter within the preamble code generator 37 by supplying the unique word supply counter switching signal, so that the signal sequence of Fig. 2B is supplied. The aforementioned signal sequence is illustrated in Fig. 2C. The transmitter 5 transmits through the antenna 54 a carrier wave modulated with an output signal sequence provided from the encoder unit 3.

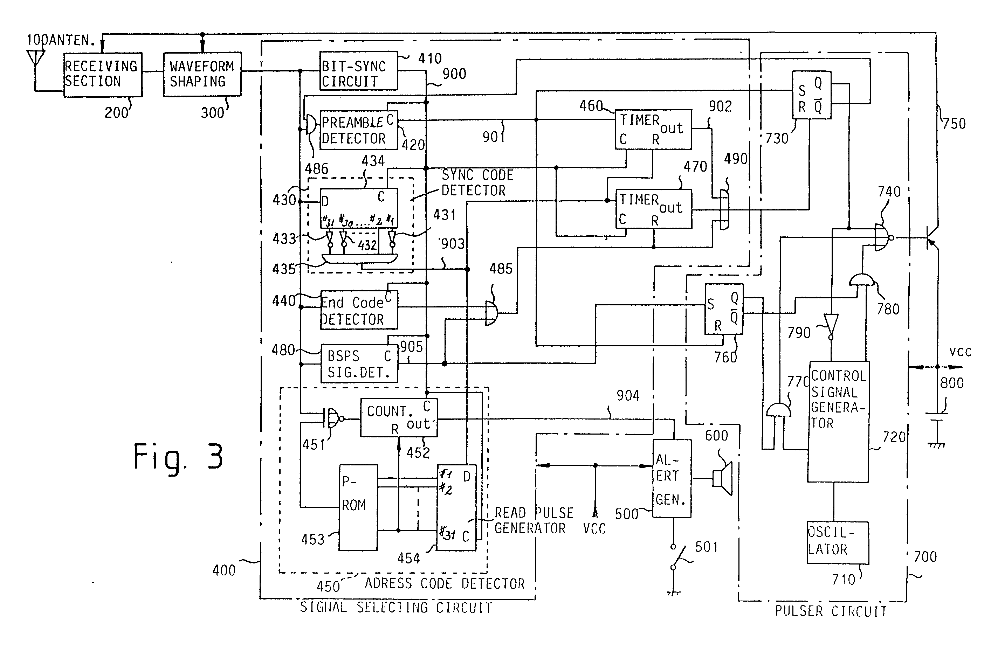

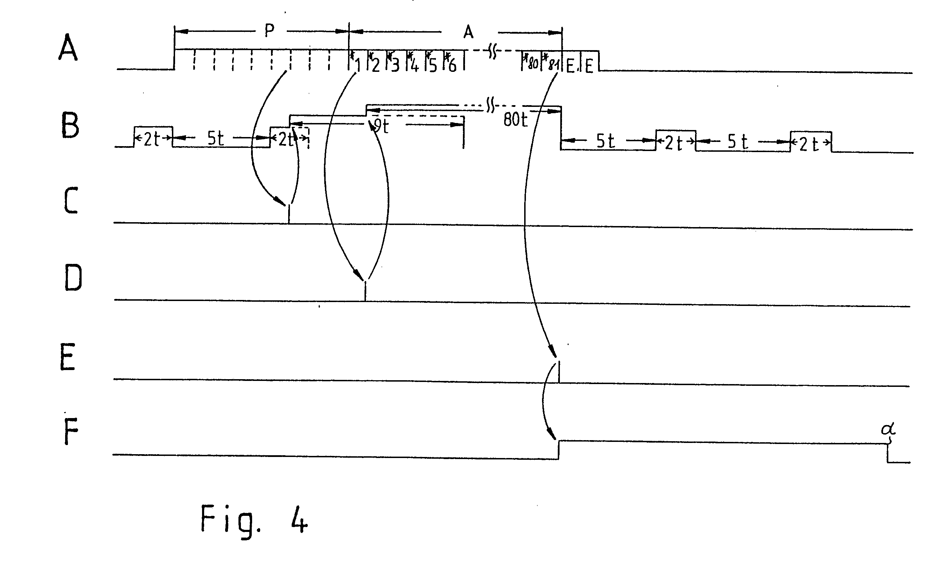

Fig. 3 is a circuit diagram illustrating a paging receiver according to the present invention. The operation of this receiver will be described below with reference to time charts of Fig. 4.

A modulated carrier wave transmitted from the transmitter 5 on the base station side is picked up by an antenna 100, and received and demodulated by a receiving section 200 to be connected into a baseband signal. This baseband signal is shaped by a waveform shaping circuit 300 into a rectangular wave, which is supplied to a signal selecting circuit 400. These operations are, of course, performed with battery saving function turned off, i.e., while every part of the receiver is supplied with power. This period lasts for $2t$ followed by a period of $5t$ of "on" state of battery saving (where $t$ is one-word length of time) as shown in Fig. 4B.

Now, when the paging receiver receives the modulated carrier wave shown in Fig. 4A, a bit-sync circuit 410 regenerates a clock signal bit-synchronized with the demodulated signal, and supplies it by way of a line 900 to a preamble code detector 420, a sync code detector 430, an end code detector 440 and an address code detector 450. The output of the waveform shaping circuit 300 is supplied to one input of the preamble code detector 420 through an AND gate 486. The other input of this AND gate 486 is connected to the $\bar{Q}$ output of a flip-flop (F/F) 730 within a pulser circuit 700. The $\bar{Q}$ output of the F/F 730 is "H" only when the battery saving is on state, but it is "L" when it is off state. Therefore, the signal to the preamble code detector 420 is given only under the on state.

The detector 420, upon detection of the preamble code, provides a detection pulse of Fig. 4C at a connection line 901. By this detection pulse is set the F/F 730 of the pulser circuit 700, and the Q output of the F/F 730, through a NOR gate 740, keeps a switching transistor 750 on. Meanwhile, the $\bar{Q}$ output of the F/F 730 becomes "L" to turn the AND gate 486 into a forbidden state. The pulse of the line 901 shown in Fig. 4C further starts a timer 460, which, in response to the clock signal from the line 900, begins counting the time. The length of time at which this timer 460 is set (the third duration of time) is $9t$ as shown in Fig. 4B.

Now supposing that no sync code (#1 in Fig. 4A) is detected within this $9t$ length of time, a time-out signal is outputted to a line 902 and resets the F/F 730 through an OR gate 490. As a result, the Q output of the F/F 730 becomes "L", and this "L" signal turns off the switching transistor 750 via the NOR gate 740 to return the receiver to the on state of battery saving. Meanwhile, when the $\bar{Q}$ output of the F/F 730 becomes "H", the AND gate 486 turns into a connected state.

If the sync code (#1 in Fig. 4A) is detected within $9t$, a detection pulse is outputted to a line 903 as shown in Fig. 4D. This detection pulse resets the timer 460 via the line 903, and at the same time causes a timer 470 to start counting the time. The timer 470 is set so that the fourth duration of time is $80t$ as shown in Fig. 4B. At the end of the period $80t$ set at this timer 470, the switching transistor 750 is turned off as in the case of the timer 460.

Here the circuit structures of the preamble code detector 420, sync code detector 430 and end code detector 440 are similar, and therefore that of the sync code detector 430 will be now described as representative of the three. The sync code of Fig. 2E is provided to a 31-bit shift register 434. The 31-bit output of the shift register 434 is supplied to an AND gate 435 directly when the corresponding bits of the sync code are at "H" level and, through inverters 431, 432, 433 and so on when the corresponding bits of the same are at "L" level. Only when the 31 bits supplied to the shift register 434 are respectively identical to the 31 bits of the sync code, the AND gate 435 provides a detection pulse of "H" level (Fig. 4D) at the line 903. The preamble code detector 420, sync code detector 430 and end code detector 440 differ from one another only in the positions of inverters arranged to match the "L" level of the code patterns of Figs. 2D, 2E and 2H.

Next, if the address code of this receiver (supposed to have the code pattern of Fig. 2G) is transmitted from the base station in the position of the #81 word of Fig. 4A, the address code detector 450 will output a detection pulse shown in Fig. 4E over a line 904, and this pulse is supplied to an alert tone generator 500 to actuate it. The generator 500 continuously generates an alert output as shown in Fig. 4F, and drives a speaker 600 to let the bearer of the receiver know the fact of its being paged. In Fig. 4F, a indicates a timing at which a reset switch 501 is pressed to cease the alert tone generation.

Now will be described in detail the operation of the address code detector 450. A sync code detection pulse (see Fig. 4D) at the line 903 actuates a read pulse generator 454 to sequentially and cyclically generate read pulses synchronized with the clock signal from the line 900 at output terminals #1 to #31. In a programmable read-only memory (PROM) 453, the address code assigned to the paging receiver is written to advance. The PROM may be made of the so-called detachable cord-plug type. The read pulse generator 454 comprises a shift register. First, in response to a read pulse from #1 of the read pulse generator 454, the first bit of the address code stored in the PROM 453 is read out, and supplied to one of the input terminals of a two-input exclusive NOR gate 451. To the other input terminal of the gate 451 is supplied an output from the waveform shaping circuit 300, and this gate 451 outputs an "H" level signal if the two input are identical with each other or an "L" level signal if not. This "H" level signal is counted by a 31-bit counter 452. Since the clock signal from the line 900 is supplied to the counter 452, if the consecutive bits from the PROM 453 and the outputs of the waveform shaping circuit 300 are respectively found by the exclusive NOR gate 451 to be identical with each other, the counter 452 will count up sequentially until the #31 bit and, if all the 31 bits are found to be identical, supply a detection pulse (Fig. 4E) over the line 904. Then the counter 452 is reset by the trailing edge of the read pulse of #31 to prepare itself for the next counting.

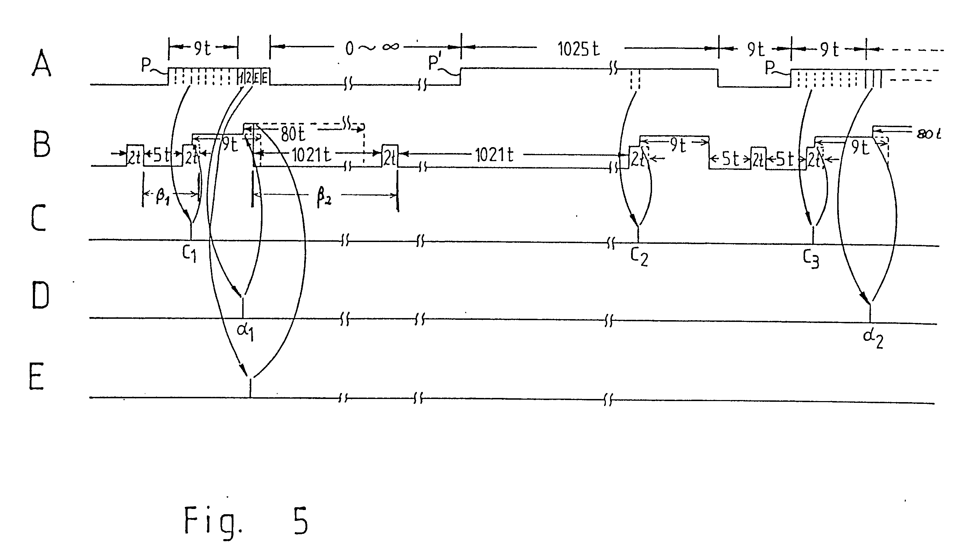

Fig. 5A shows a modulated carrier wave transmitted from the base station. Unless four call number siganls from the telephone exchange 2 (see Fig. 1) are supplied to the encoding unit 3 of the base station within a prescribed length of time (1,024 words' length), the base station transmits from its transmitter 5 a nine-word ($9t$) preamble code (P in Fig. 5A), followed by a one-word sync code (1 in Fig. 5A), a one-word battery saving period switching (BSPS) signal (2 in Fig. 5A) and a two-word end code (E in Fig. 5A). After that, the modulated carrier wave emission from the transmitter 5 is suspended until four call number signals are registered in the memory circuit 35 of the encoding unit 3. Upon registration of four address number signals, as described with reference to Fig. 2C, a modulated carrier wave is emitted from the transmitter 5 as shown in Fig. 5A.

The battery saving operation of the paging receiver shown in Fig. 3, corresponding to the modulated carrier wave of Fig. 5A, is represented by Fig. 5B. The receiving section 200 and the waveform shaping circuit 300, as shown in Fig. 5B, are repeatedly turning on ($2t$) and off ($5t$) the battery saving operation, regulated by the pulser circuit 700. When a preamble code P is detected by code detector 420 while the receiving section 200 and the waveform shaping circuit 300 are within the $2t$ period of the off state of battery saving, a detection pulse is generated at point c1 of Fig 5C. At thit time, as described with reference to Fig. 4C, the timer 460 sets the third duration of time, $9t$ as shown in Fig. 5B. And a sync code, as described with reference to Fig. 4D, is detected at point d1 of Fig. 5D, and the timer 470 sets the fourth duration of time $80t$. Here is detected a battery saving period switching (BSPS) signal 2, shown in Fig. 5A, by a BSPS, signal detector 480 (see Fig. 3), and a detection pulse of Fig. 5E is outputted at a like 905. The pulse on the line 905 resets the timer 470 by way of an OR gate 485, further resets the F/F 730 by way of the OR gate 490 and inverts its Q output to "L" level. It further turns off the switching transistor 750 via the NOR gate 740.

Here, the detection pulse on the line 905 sets an F/F 760, and inverts the outputs Q and $\bar{Q}$. The outputs $\bar{Q}$ and Q of the F/F 760 are connected to AND gates 780 and 770, respectively, and keep the former in a forbidden state and the latter in a connected state. To the other input terminal of the AND gate 770 is repeatedly fed a control signal at a repetition period represented by 32 in Fig. 5B, while to the other input terminal of the AND gate 780 is repeatedly fed a control signal at a repetition period represented by β1 in Fig. 5B. These control signals are supplied from a control signal generator 720, which frequency-divides the output of an oscillator 710 to generate the required control signals at the repetition periods β1 and β2. The pulse to reset and initialize the control signal generator 720 is obtained by inverting the output Q of the F/F 730 with an inverter 790. Consequently, the NOR gate 740 is controlled by the output of the AND gate 770, and repeatedly turns on and off the switching transistor 750 at the repetition period of β2.

Now will be described the advantage of changing the repetition period of battery saving pulses. Since the average current of the receiving section 200 and the waveform shaping circuit 300 is 3 mA and that of the signal selecting circuit 400 and the pulser circuit 700 is 150 μA, the average current during the period β1 is

$$\frac{2t \times 3000 + 5t \times 1500}{7t} = 964 \ \mu A$$

or, during the other β2,

$$\frac{2t \times 3000 + 1021t \times 150}{1023t} = 155 \ \mu A$$

Accordingly, the amperage for the paging of the present invention is only 16 per cent of that involved in the absence of switching from β1 to β2.

Then, if a preamble code of $1,025t$ in time length, repersented by P' in Fig. 5A, is transmitted from the base station, the preamble code detector 420 outputs the detection pulse to the line 901 at point c2 of Fig. 5C. The pulse on the line 901 resets the F/F 760 and inverts the outputs Q and $\bar{Q}$. As a result, the AND gate 780 is switched from the forbidden to the connected state, and the AND gate 770, the other way around, the battery saving period being changed from β2 to β1. Since the pulse on the line 902 (at point c2 in Fig. 5C) induces similar actions to what were described with reference to point c1 in Fig. 5C, battery saving is suspended for a period of $9t$. Because no sync code is detected within this period of $9t$ as illustrated, the receiver resumes battery saving in response to a time-out signal from the timer 460. A $9t$ pause is provided between preamble codes P' and P on the base station side to avoid impossibility to suspend battery saving, which might otherwise arise if the preamble code P arrives immediately following the code P' within the $9t$ period during which the receiver is waiting for a sync code.

Next, the process in which a preamble code P is detected at point c3 in Fig. 5C and a sync code is detected at point d2 in Fig. 5D are the same as in Figs. 4C and 4D, respectively.

An end code E (see Fig. 2H) is transmitted following an address code for the purpose of letting the paging receiver resume battery saving by detecting the end code with the end code detector 440 and resetting the F/F 730 via the OR gates 485 and 490 in response to the end code detection pulse, so that the paging receiver may take no unnecessary receiving action when the address code transmission from the base station is less than $80t$.

Although only the use of the code pattern of Fig. 2D for the preamble code is referred to in the foregoing description of the preferred embodiment, the preamble code can obviously be replaced with any other code different from the sync code, battery saving period switching code, end code and address code.

It will be readily understood that the period β2 can be extended by grouping the paging receivers. The call number capacity is the 21st power of 2 (equal to 2097152) because the call number code has 21 information bits, as shown in Fig. 2G. These 2097152 different call numbers can be grouped into, for example, 200 groups each of which has 10,000 call numbers and is headed with a preamble code unique thereto. In such a grouped number system, the encoding unit comprises a sorter provided between the trunk 31 and the register 33 (see Fig. 1) with which the call numbers are sorted into prefixed groups. For each group, the encoding unit includes the register 33, the decimal-binary converter 36 and the encoder 41 (see Fig. 1). The encoding unit also comprises a transmission sequence arranging circuit following the NAND gate 46 to arrange the encoded group paging codes from the encoders 41 to a paging code.

On the other hand, each paging receiver which is sorted in a given group, has to have a preamble code detector unique to the given group. Although this unique preamble code detector makes the paging receiver somewhat complex, this complexity can be eased by composing the decoder of a PROM of the code-plug type like the address code detector 450 (Fig. 3) is and, if these preamble and address code detectors are accommodated into a single PROM, the complexity will be more decreased.

As hitherto described, the radio paging system according to the present invention sets more than one duration and repetition period for battery saving pulses for the paging receiver, resulting in the reduction of the paging receiver's power consumption. In addition, the power switch of the paging receiver can be eliminated that makes the receiver more compact and easier to operate.

**Claims**

1. A radio paging system having a paging receiver, said receiver comprising: first means (100, 200, 300) for receiving and demodulating a carrier wave; means (400) for processing the output of said first means (100, 200, 300); and means (750, 800) for supplying power to prescribed parts of said receiver in response to a power control signal, characterized in that

said carrier wave is modulated with a first or with the first and a second preamble code, depending on the number of paging calls, and with a control code, said first preamble code being shorter than said second preamble code;

said processing means (400) is adapted to provide said first and second preamble code and said control code in response to the output of said first means (100, 200, 300), and

said receiver comprises means (710, 720) for generating first and second control signals having first and second repetition periods, respectively, said first repetition period being shorter than said first preamble code and shorter than said second repetition period, said second repetition period being shorter than said second preamble code; and means (730, 740, 760, 770, 780, 790) for supplying said second control signal to said power supply means as said power control signal in response to said control code and for supplying said first control signal to said power supply means as said power control signal in response to said second preamble code.

2. A radio paging system as claimed in claim 1 further having means (3, 5) for selectively transmitting said carrier wave depending on whether said number of paging calls within a given period of time exceeds a predetermined number.

3. A radio paging system as claimed in claim 2, wherein said predetermined number is one.

4. A radio paging system as claimed in claim 1, wherein said prescribed parts of the receiver comprise said receiving and demodulating means (100, 200, 300).

5. A radio paging system as claimed in claim 1, wherein said carrier wave is further modulated with an address code, said first means (100, 200, 300) receives and demodulates said carrier wave to provide a demodulated address code, said processing means (400) compares said demodulated address code with a prescribed code and provides an alert signal when they coincide with each other, and said receiver further comprises means (453) for storing said prescribed code; and means (500, 600) for generating an audible alert tone in response to said alert signal.

6. A method of switching, in a radio paging system, the repetition period of receiver energizing pulses depending on call traffic, the method comprising the step of supplying power to a prescribed part of a paging receiver at a first repetition period and receiving a first preamble code, characterized in that said method further comprises the steps of:

receiving a control code following said first preamble code when said prescribed part is supplied with said receiver-energizing pulses at said first repetition period, said control code being provided when there are no more calls to be received;

changing in response to the control code the repetition period of said receiver-energizing pulses from said first repetition period to a second repetition period longer than said first repetition period;

receiving a second preamble code when said prescribed part is supplied with said receiver energizing pulses at said second repetition period, said second preamble code being provided when there are calls to be received, the length of said second preamble code being longer than said second repetition period; and

changing in response to the second preamble code the repetition period of said receiver-energizing pulses from said second repetition period to said first repetition period.

7. A paging receiver for use in a radio paging system for the transmission and reception of messages following a first preamble code, said receiver permitting power to be supplied intermittently to prescribed parts (200, 300) of said receiver, characterized in that said receiver comprises first means (400, 700) for changing the frequency of said intermittent supply of power from a first repetition period to a second repetition period, longer than said first reception period, when said first means (400, 700) receives a battery saving period switching signal representative of that there are no more calls to be received, and second means (420, 700) for changing the frequency of said intermittent supply of power from said second repetition period to said first repetition period when said second means (420, 700) receives a second preamble code, the length of said second preamble code being longer than said second repetition period.

8. A paging receiver as claimed in claim 7, said first means (400, 700) comprising means (480) for receiving said battery saving period switching signal, the output of said receiving means (480) preventing the continuous supply of power to said prescribed parts of said receiver.

9. A paging receiver as claimed in claim 8, wherein said prescribed parts of said receiver comprise means (200, 300) for receiving and demodulating radio signals.

10. A base station (3, 5) for use in a radio paging system for the transmission and reception of messages, said base station (3, 5) comprising first means (34, 37) for generating a first preamble code when there are calls to be received, said radio paging system including a plurality of paging receivers permitting power to be supplied intermittently to prescribed parts of said receivers, characterized in that said base station (3, 5) further comprises second means (34, 39) for generating a control code following said first preamble code when there are no more calls to be received, said control code causing the frequency of said intermittent supply of power to change from a first repetition period to a second repetition period, longer than said first repetition period, third means (34, 37) for generating a second preamble code, the length of said second preamble code being longer than that of said first preamble code, said second preamble code causing said frequency of said intermittent supply of power to change from said second repetition period to said first repetition period; and fourth means (31—36, 41) for providing said messages subsequent to either said first or said second preamble code.

11. A base station as claimed in claim 10, wherein each of said first and second preamble codes includes a plurality of different code patterns, each of said different code patterns being assigned to each different group of said paging receivers.

**Patentansprüche**

1. Funkrufsystem mit einem Rufempfänger, welcher aufweist: eine erste Einrichtung (100, 200, 300) zum Empfangen und Demodulieren einer Trägerwelle; eine Einrichtung (400) zum Verarbeiten des Ausgangs der ersten Einrichtung (100, 200, 300); und eine Einrichtung (750, 800) zum Versorgen bestimmter Teile des Empfängers mit Energie als Antwort auf ein Energiesteuersignal, dadurch gekennzeichnet, daß die Trägerwelle in Abhängigkeit von der Zahl der Rufe mit einem ersten Einleitungscode oder mit dem ersten und einem zweiten Einleitungscode und mit einem Steuercode moduliert wird, wobei der erste Einleitungscode kürzer ist als der zweite Einleitungscode;

daß die Verarbeitungseinrichtung (400) derart ausgebildet ist, daß sie als Antwort auf den Ausgang der ersten Einrichtung (100, 200, 300) den ersten und zweiten Einleitungscode und den Steuercode liefern kann, und

daß der Empfänger eine Einrichtung (710, 720) zum Erzeugen erster und zweiter Steuersignale mit ersten bzw. zweiten Folgeperioden aufweist, wobei die erste Folgeperiode kürzer ist als der erste Einleitungscode und kürzer als die zweite Folgeperiode, und wobei die zweite Folgeperiode kürzer ist als der zweite Einleitungscode; und eine Einrichtung (730, 740, 760, 770, 780, 790) zum Liefern des zweiten Steuersignals zu der Energieversorgungseinrichtung als das Energiesteuersignal als Antwort auf den Steuercode und zum Liefern des ersten Steuersignals zu der Energieversorgungseinrichtung als das Energiesteuersignal als Antwort auf den zweiten Einleitungscode.

2. Funkrufsystem nach Anspruch 1, welches ferner eine Einrichtung (3, 5) aufweist zum selektiven Übertragen der Trägerwelle in Abhängigkeit davon, ob die Zahl der Rufe innerhalb einer gegebenen Zeitperiode eine bestimmte Zahl übersteigt.

3. Funkrufsystem nach Anspruch 2, wobei die bestimmte Zahl eins ist.

4. Funkrufsystem nach Anspruch 1, wobei die bestimmten Teile des Empfängers die Empfängs- und Demodulationseinrichtung (100, 200, 300) umfassen.

5. Funkrufsystem nach Anspruch 1, wobei die Trägerwelle ferner mit einem Adressencode moduliert ist, die erste Einrichtung (100, 200, 300) die Trägerwelle empfängt und demoduliert und einen demodulierten Adressencode liefert, die Verarbeitungseinrichtung (400) den demodulierten Adressencode mit einem bestimmten Code vergleicht und ein Alarmsignal liefert, wenn sie miteinander übereinstimmen, und wobei der Empfänger ferner eine Einrichtung (453) zum Speichern des bestimmten Codes und eine Einrichtung (500, 600) zum Erzeugen eines hörbaren Alarmtons als Antwort auf das Alarmsignal aufweist.

6. Verfahren zum Umschalten der Folgeperiode von den Empfänger erregenden Impulsen in Abhängigkeit von der Rufhäufigkeit in einem Funkrufsystem, wobei das Verfahren den Verfahrensschritt aufweist, daß ein bestimmter Teil eines Rufempfängers mit einer ersten Folgeperiode mit Energie versorgt wird und ein erster Einleitungscode empfangen wird, dadurch gekennzeichnet, daß das Verfahren ferner die folgenden Verfahrensschritte aufweist:

Empfangen eines Steuercodes nach dem ersten Einleitungscode, wenn der bestimmte Teil mit der ersten Folgeperiode mit den den Empfänger erregenden Impulsen versorgt wird, wobei der Steuercode voregsehen ist, wenn keine weiteren Rufe mehr zu empfangen sind;

Ändern der Folgeperiode der den Empfänger erregenden Impulse, als Antwort auf den Steuercode, von der ersten Folgeperiode zu einer zweiten Folgeperiode, die länger ist als die erste Folgeperiode;

Empfangen eines zweiten Einleitungscodes, wenn der bestimmte Teil mit der zweiten Folgeperiode mit den den Empfänger erregenden Impulsen versorgt wird, wobei der zweite Einleitungscode vorgesehen ist, wenn noch Rufe zu empfangen sind, wobei die Länge des zweiten Einleitungscodes länger ist als die zweite Folgeperiode; und

Ändern der Folgeperiode der den Empfänger erregenden Impulse, als Antwort auf den zweiten Einleitungscode, von der zweiten Folgeperiode zu der ersten Folgeperiode.

7. Rufempfänger zur Verwendung in einem Funkrufsystem für die Übertragung und den Empfang von Nachrichten, die einem ersten Einleitungscode folgen, wobei der Empfänger derart aufgebaut ist, daß bestimmte Teile (200, 300) des Empfängers intermittierend mit Energie versorgt werden können, dadurch gekennzeichnet, daß der Empfanger aufweist: eine erste Einrichtung (400, 700) zum Ändern der Frequenz der intermittierenden Energieversorgung von einer ersten Folgeperiode zu einer zweiten Folgeperiode, die länger ist als die erste Folgeperiode, wenn die erste Einrichtung (400, 700) ein Batteriesparperiode-Schaltsignal empfängt, welches darstellt, daß keine weiteren Rufe mehr zu empfangen sind, und eine zweite Einrichtung (420, 700) zum Ändern der Frequenz der intermittierenden Energieversorgung von der ersten Folgeperiode zu der zweiten Folgeperiode, wenn die zweite Einrichtung (420, 700) einen zweiten Einleitungscode empfängt, dessen Länge länger ist als die zweite Folgeperiode.

8. Rufempfänger nach Anspruch 7, wobei die erste Einrichtung (400, 700) eine Einrichtung (480) zum Empfangen des Batteriesparperioden-Schaltsiganls aufweist, und wobei der Ausgang der Empfangseinrichtung (480) die kontinuierliche Energieversorgung der bestimmten Teile des Empfängers unterbricht.

9. Rufempfänger nach Anspruch 8, wobei die bestimmten Teile des Empfängers eine Einrichtung (200, 300) zum Empfangen und Demodulieren von Funksignalen aufweist.

10. Basisstation (3, 5) zur Verwendung in einem Funkrufsystem für die Übertragung und den Empfang von Nachrichten, wobei die Basisstation (3, 5) eine erste Einrichtung (34, 37) zum Erzeugen eines ersten Einleitungscodes aufweist, wenn Rufe zu empfangen sind, und wobei das Funkrufsystem mehrere Rufempfänger umfaßt, die derart aufgebaut sind, daß bestimmte Teile der Empfänger intermittierend mit Energie versorgt werden können, dadurch gekennzeichnet, daß die Basisstation (3, 5) ferner aufweist: eine zweite Einrichtung (34, 39) zum Erzeugen eines Steuercodes nach dem ersten Einleitungscode, wenn keine Rufe mehr zu empfangen sind, wobei der Steuercode veranlaßt, daß sich die Frequenz der intermittierenden Energievorsorgung von einer ersten Folgeperiode zu einer zweiten Folgeperiode ändert, die länger ist als die erste Folgeperiode, eine dritte Einrichtung (34, 37) zum Erzeugen eines zweiten Einleitungscodes, dessen Länge länger ist als diejenige des ersten Einleitungscodes, wobei der zweite Einleitungscode veranlaßt, daß die Frequenz der intermittierenden Energievorsorgung von der zweiten Folgeperiode zu der ersten Folgeperiode geändert wird, und eine vierte Einrichtung (31—36, 41) zum Liefern der Nachrichten anschließend an entweder den ersten oder den zweiten Einleitungscode.

11. Basisstation nach Anspruch 10, wobei sowohl der erste als auch der zweite Einleitungscode mehrere verschiedene Codemuster aufweisen, wobei jedes der verschiedenen Codemuster jeder verschiedenen Gruppe der Rufempfänger zugeordnet ist.

**Revendications**

1. Radio-système de recherche de personnes comportant un récepteur de recherche de personnes, ce récepteur comportant: un premier moyen (100, 200, 300) pour recevoir et démoduler une onde porteuse; un moyen (400) pour traiter la sortie du premier moyen (100, 200, 300); et un moyen (750, 800) pour alimenter en puissance des parties prescrites du récepteur en réponse à un signal de commande de puissance, caractérisé en ce que:

l'onde porteuse est modulée avec un premier ou avec le premier et un second code de préambule, en fonction du nombre des appels de recherche de personnes, et avec un code de commande, le premier code de préambule étant plus court que le second code de préambule;

le moyen de traitement (400) est destiné à fournir les premier et second codes de préambule et le code de commande en réponse à la sortie du premier moyen (100, 200, 300) et;

le récepteur comprend un moyen (710, 720) pour produire des premier et second signaux de commande ayant des première et seconde périodes de répétition, respectivement, la première période de répétition étant plus courte que le premier code de préambule et plus courte que la seconde période de répétition, la seconde période de répétition étant plus courte que le second code de préambule, et un moyen (730, 740, 760, 770, 780, 790) pour fournir le second signal de commande au moyen d'alimentation en puissance à titre du siganl de commande de puissance en réponse au code de commande et pour fournir le premier signal de commande au moyen d'alimentation en puissance à titre du signal de commande de puissance en réponse au second code de préambule.

2. Radio-système de recherche de personnes selon la revendication 1, comportant en outre un moyen (3, 5) pour transmettre sélectivement l'onde porteuse en fonction du fait que ledit nombre d'appels de recherche de personnes pendant un laps de temps donné dépasse un nombre prédéterminé.

3. Radio-système de recherche de personnes selon la revendication 2, dans lequel le nombre prédéterminé est un.

4. Radio-système de recherche de personnes selon la revendication 1, dans lequel les parties prescrites du récepteur comprennent le moyen de réception et de démodulation (100, 200, 300).

5. Radio-système de recherche de personnes selon la revendication 1, dans lequel l'onde porteuse est en outre modulée avec un code d'adresse, le premier moyen (100, 200, 300) reçoit et démodule l'onde porteuse pour fournir un code d'adresse démodulé, le moyen de traitement (400) compare le code d'adresse démodulé à un code prescrit et fournit un signal d'alarme lorsqu'ils coïncident, et le récepteur comporte en outre un moyen (453) pour stocker le code prescrit; et un moyen (500, 600) pour produire une tonalité d'alarme audible en réponse au signal d'alarme.

6. Procédé de commutation, dans un radiosystème de recherche de personnes, la période de répétition des impulsions d'excitation du récepteur dépendant du trafic des appels, le procédé comprenant l'étape de fourniture de puissance à une partie prescrite d'un récepteur de recherche de personnes à une première période de répétition et de réception d'un premier code de préambule, caractérisé en ce que le procédé comporte en outre les étapes consistant à:

recevoir un code de commande suivant le premier code de préambule lorsque la partie prescrite est alimentée avec les impulsions d'excitation du récepteur à la première période de répétition; le code de commande étant fourni lorsqu'il n'y a plus d'appels à recevoir;

changer, en réponse au code de commande, la période de répétition des impulsions d'excitation du récepteur pour la faire passer de la première période de répétation à une seconde période de répétition plus longue que la première période de répétition;

recevoir un second code de préambule lorsque la partie prescrite est alimentée avec les impulsions d'excitation du récepteur à la seconde période de répétition, le second code de préambule étant fourni lorsqu'il y a des appels à recevoir, la longueur du second code de préambule étant plus grande que la seconde période de répétition; et

changer, en réponse au second code de préambule la période de répétition des impulsions d'excitation du récepteur pour la faire passer de la seconde période de répétition à la première période de répétition.

7. Récepteur de recherche de personnes destiné à être utilisé dans un radio-système de recherche de personnes, pour la transmission et la réception de messages suivant un premier code de préambule, le récepteur permettant la fourniture par intermittence de puissance à des parties prescrites (200, 300) du récepteur, caractérisé en ce que le récepteur comprend un premier moyen (400, 700) pour changer la fréquence de la fourniture intermittente de puissance afin de la faire passer d'une première période de répétition à une seconde période de répétition, plus longue que la première période de répétition, lorsque le premier moyen (400, 700) reçoit un signal de commutation de période pour économiser la batterie, représentatif du fait qu'il n'y a plus d'appels à recevoir, et un second moyen (420, 700) pour changer la fréquence de la fourniture intermittente de puissance afin de la faire passer de la seconde période de répétition à la première période de répétition lorsque le second moyen (420, 700) reçoit un second code de préambule, la longueur du second code de préambule étant plus grande que la seconde période de répétition.

8. Récepteur de recherche de personnes selon la revendication 7, le premier moyen (400, 700) comprenant un moyen (480) pour recevoir le signal de commutation de période pour économiser la batterie, la sortie du moyen de récepteur (480) empêchant la fourniture continue de puissance aux parties prescrites du récepteur.

9. Récepteur de recherche de personnes selon la revendication 8, dans lequel les parties prescrites du récepteur comprennent un moyen (200, 300) pour recevoir et démoduler des signaux radio.

10. Poste de base (3, 5) destiné à être utilisé dans un radio-système de recherche de personnes pour la transmission et la réception de messages, le poste de base (3, 5) comprenant un premier moyen (34, 37) pour produire un premier code de préambule lorsqu'il y a des appels à recevoir, le radio-système de recherche de personnes comportant une multitude de récepteurs de recherche de personnes permettant de fournir par intermittence de la puissance à des parties prescrites des récepteurs, caractérisé en ce que le poste de base (3, 5) comprend en outre un second moyen (34, 39) pour produire un code de commande suivant le premier code de préambule lorsqu'il n'y a plus d'appels à recevoir, le code de commande provoquant le changement de la fréquence de la fourniture intermittente de puissance pour la faire passer d'une première période de répétition à une seconde période de répétition, plus longue que la première période de répétition, un troisième moyen (34, 37) pour produire un second code de préambule, la longueur du second code de préambule étant plus grande que celle du premier code de préambule, le second code de préambule provoquant le changement de la fréquence de la fourniture intermittente de puissance afin de la faire passer de la seconde période de répétition à la première période de répétition; et un quatrième moyen (31—36; 41) pour fournir les messages à la suite soit du premier code de préambule soit du second code de préambule.

11. Poste de base selon la revendication 10, dans lequel chacun des premier et second codes de préambule comporte une multitude de configuration différentes de code, chacune des configurations différentes de code étant affectées à chaque groupe différent de récepteurs de recherche de personnes.

Fig. 1

ENCODING UNIT

3

PREAMBLE GENERATOR 37

47

SYNC CODE GENERATOR 38

42

44

BS PERIOD SW CODE 39

END CODE GEN. 40

43

45

TRUNK 31

SET CALL SWITCH 32

TIMING SIGNAL GENERATOR 34

REGISTER 33

MEMORY 35

DEC.-BIN. CONVERTER 36

EN-CODER 41

46

TRANSMITTER

MODULATOR 51

FREQUEN. CONVERT. 52

IF AMP 53

54

5

0 124 788

Fig. 2

Fig. 3

0 124 788

Fig. 4

0 124 788

Fig. 5

0 124 788